Europäisches Patentamt

European Patent Office

Office européen des brevets

(11) Publication number: **0 206 829**
A2

# (12) EUROPEAN PATENT APPLICATION

(21) Application number: 86304947.4

(22) Date of filing: 25.06.86

(51) Int. Cl.⁴: **G 06 K 9/22, G 06 F 3/00**

(30) Priority: 26.06.85 JP 137950/85

(43) Date of publication of application: 30.12.86
Bulletin 86/52

(84) Designated Contracting States: DE FR GB

(71) Applicant: **Kabushiki Kaisha Toshiba, 72, Horikawa-cho
Saiwai-ku, Kawasaki-shi Kanagawa-ken 210 (JP)**

(72) Inventor: **Kurihara, Motoshi Patent Division, Kabushiki
Kaisha Toshiba 1-1 Shibaura 1-chome, Minato-ku
Tokyo 105 (JP)**
Inventor: **Nakamura, Yoshikathu Patent Division,
Kabushiki Kaisha Toshiba 1-1 Shibaura 1-chome,
Minato-ku Tokyo 105 (JP)**

(74) Representative: **Freed, Arthur Woolf et al, MARKS &
CLERK 57-60 Lincoln's Inn Fields, London WC2A 3LS
(GB)**

(54) Character input apparatus.

(57) A character input apparatus has a position input device
(11) for inputting coordinate values corresponding to a position
indicated by contacting an input surface, a recognition pro-
cessor (42) for analyzing a coordinate value string sequentially
input by the position input device (11) to obtain a character
code corresponding thereto, and a display device (14) for
displaying the character code obtained by the recognition
processor (42). The character input apparatus includes a
character size processor (43) for discriminating a distribution
range of the coordinate value string to obtain character size
data corresponding to the size of the distribution range. A
character is displayed on the display device (14) in a character
size corresponding to the character size data obtained by the
character size processor (43).

```
        ┌──────────┐   ,12        ,13
┌ ─ ─ ─ │,11       │ ─ ─ ─ ─ ─ ┐
│  POSITION          CONTROLLER   EXTERNAL
│  INPUT DEVICE                   STORAGE DEVICE
│
│      14─┐ DISPLAY DEVICE  ┌─21
└ ─ ─ ─ ─ ─ ─ ─ ─ ─ ─ ─ ─ ─ ─ ┘
```

0206829

- 1 -

## Character input apparatus

The present invention relates to a character input apparatus for recognizing a written character using a position (coordinate) input apparatus to input the character, and more particularly, to a character input apparatus which can discriminate the size of a written character using the position (coordinate) input apparatus and can input the size of the input character.

Various wordprocessors (e.g., for Japanese, English, Chinese, and the like) for creating and editing documents have become increasingly popular. For example, many conventional Japanese wordprocessors adopt character displays for displaying documents to be processed. The character display can only display characters of the same size, and cannot change the size of the characters. Therefore, in a conventional Japanese wordprocessor, the documents are displayed using characters of a given size. However, a handwritten or printed document normally includes characters of various sizes. In order to display such a document (including characters of various sizes) on the character display, the conventional Japanese wordprocessor executes special-purpose process. More specifically, an enlarged character having a horizontal size twice that of a normal character can be indicated using the display areas for two normal characters, or a reduced character can be indicated using a display area half that of a normal character, thus displaying characters of different sizes. In recent years, even bit-map displays have become popular, and characters of different sizes can be displayed at a desired position. Therefore, various methods of selecting a plurality of character sizes have been proposed.

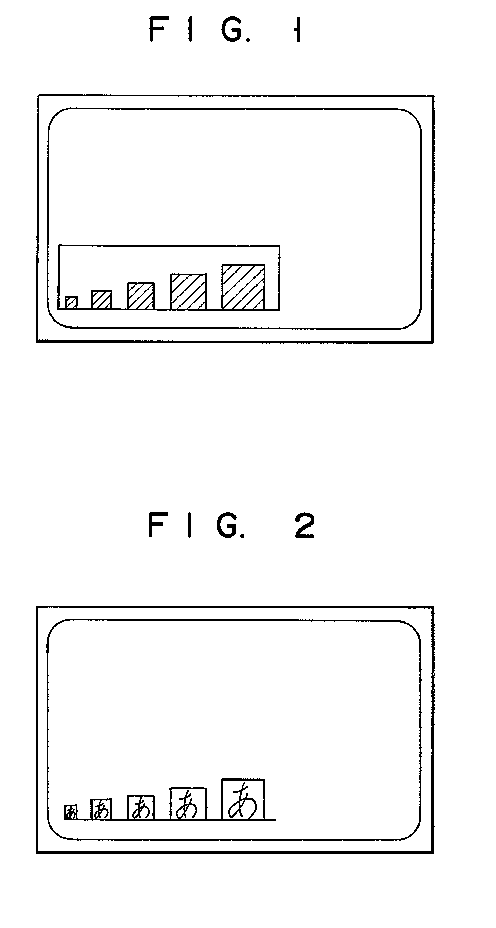

In typical conventional character size input methods using a keyboard, a character size is designated before characters are input, and the subsequently input characters are set to be the designated size. In this case, the character size input methods include: a method wherein attribute data indicating a character size is input using numeric data to designate it; a method wherein a desired character size is selected from a size menu including a plurality of squares of different sizes, as shown in Fig. 1; and a method wherein a desired character size is selected from a size menu including a plurality of sizes of an identical character, as shown in Fig. 2. When subsequent characters are to be input using a size different from that of already input characters, attribute data indicating a character size is re-designated using any of the above three methods.

In this way, each time a character size is to be changed, the character size must be re-designated before inputting characters. Therefore, when the character size is frequently changed, character size designation must be also performed frequently, thus degrading operability. In particular, although bit-map displays are popular and make display of characters of desired sizes easier, the above-mentioned character size designation methods have poor operability, and the potential of the wordprocessor cannot be fully utilized. In this way, the conventional character size designation poses a serious problem.

A position input device (e.g., a so-called tablet) is known, in which a pen or a given pen-like member is brought into contact with an input surface and position data is detected and input. An on-line character recognition apparatus using the position input device is also known. In this apparatus, when an operator writes a character on the input surface of the position input device, the position data is read in real time, and is analyzed to recognize the input character. In this apparatus, an operation from ON to OFF of the pen (from when the pen contacts the input surface until it is removed therefrom) is discriminated as one stroke, and the number of strokes and direction data or a series of direction data strings constituting each stroke are analyzed to recognize the written character. However, in the conventional character input apparatus of this type, the character size is designated using the above-mentioned three methods in the same manner as the apparatus using the keyboard. Therefore, this apparatus also poses the same problems as that of the apparatus using the keyboard.

It is an object of the present invention to provide a character input apparatus which uses a position input device (e.g, a tablet) and which recognizes characters and discriminates a character size by an on-line operation, so that the character size can be designated in substantially the same manner as in handwriting, thus allowing an easy character input operation.

A character input apparatus of the present invention reads position data input by a position input device (e.g., a tablet) and recognizes a character written on the input surface of the position input device in an on-line manner, in accordance with stroke data obtained from the position data. At the same time, the apparatus discriminates the size of the input character from the position data thereof, and selects the character size in accordance with the discriminated result, thereby inputting the recognized character size as attribute data to correspond with the input character data.

According to the present invention, character input and size selection thereof can be performed at the same time. When a large character is written in the same manner as handwriting on paper, large character size data is input. When a small character is written, small character size data is input accordingly. Therefore, when a document including character of different sizes is input, since a command input operation for designating character sizes necessary for the conventional apparatus can be omitted, characters can be input with ease.

This invention can be more fully understood from the following detailed description when taken in conjunction with the accompanying drawings, in which:

Figs. 1 and 2 are illustrations for explaining different character size input methods of a conventional apparatus;

Fig. 3 is a block diagram of a character input apparatus according to an embodiment of the present invention;

Fig. 4 is a perspective view schematically showing an arrangement of an input apparatus in the apparatus shown in Fig. 3;

Fig. 5 is an illustrative sectional view of a position input device in the apparatus shown in Fig. 4;

Fig. 6 is a diagram showing an internal arrangement of a control device in the apparatus shown in Fig. 3;

Fig. 7 is a table for explaining the content of dictionary data stored in an external storage device in the apparatus shown in Fig. 3;

Figs. 8A and 8B are illustrations for explaining a method for determining a direction value for character recognition in the apparatus shown in Fig. 3;

Fig. 9 is a flow chart showing a sequence in the apparatus shown in Fig. 3 wherein a character is input, recognized, its character size is determined, and it is displayed;

Figs. 10A to 10E are illustrations for explaining a procedure for determining a character size when a character is input to the apparatus shown in Fig. 3;

Fig. 11 is a format of character string data; and

Figs. 12 and 13 are respectively a perspective view and a block diagram schematically showing an electrostatic tablet used in another embodiment of the present invention.

An embodiment of the present invention will now be described in detail with reference to the accompanying drawings.

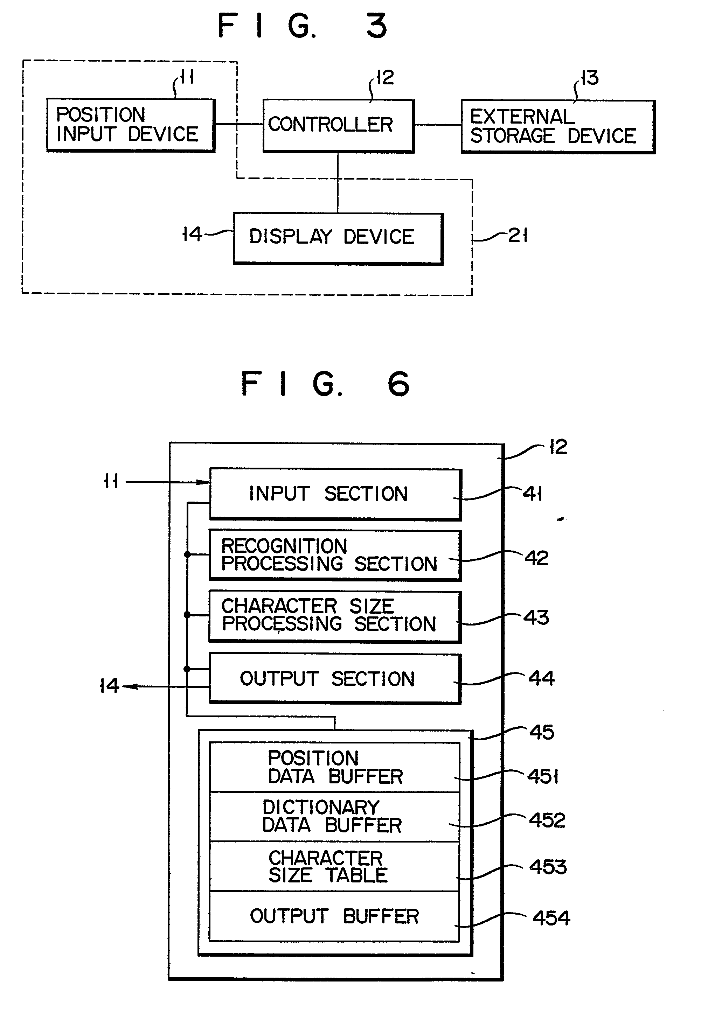

Fig. 3 shows an arrangement of a character input apparatus according to an embodiment of the present invention. Position input device 11 has a coordinate position detection function for an input surface, and inputs coordinate position data input by means of a pen or a given pen-like member (i.e., the input surface is depressed by the pen or is contacted by the pen). The position data input by device 11 is supplied to controller 12. Controller 12 recognizes a written character from the position data input from device 11, and discriminates the character size. External storage device 13 stores dictionary data used for character recognition. Display device 14 displays the recognized character in the size corresponding to the discriminated result.

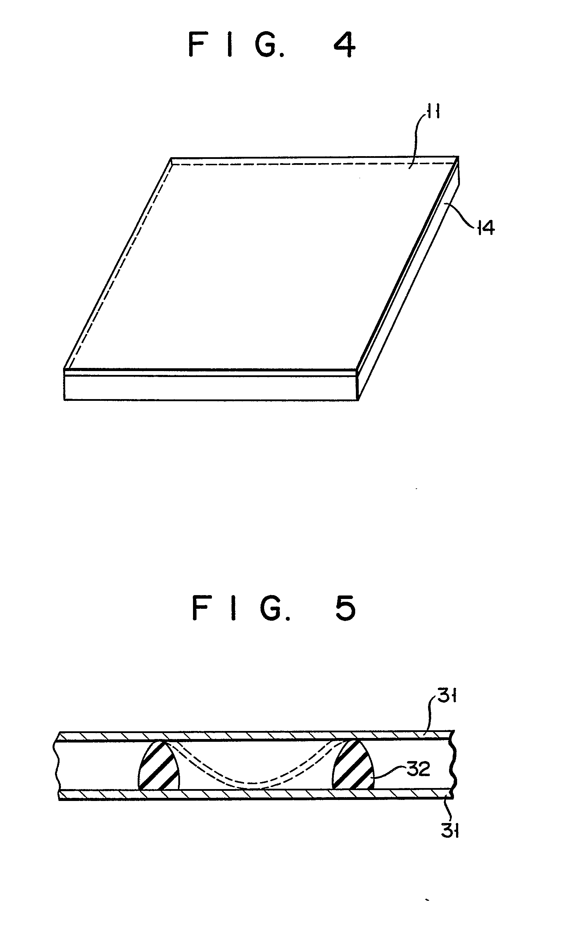

Next, input apparatus 21 having a display function used in the apparatus of the present invention will be described in detail. Input apparatus 21 is constituted by display device 14 and position input device 11. As shown in Fig. 4, input apparatus 21 comprises a sheet-like input device 11 of a transparent material mounted on the display screen of display device (e.g., a liquid-crystal display device) 14. Position input device 11 has the same arrangement as that of a so-called pressure-sensitive (resistive) tablet. As shown in Fig. 5, position input device 11 comprises a pair of opposing conductive films 31, which sandwich mesh spacer 32 therebetween. A gap between films 31 defined by spacer 32 is several tens of micrometers. When one conductive film 31 is externally depressed by the pen, it is brought into contact with the other conductive film 31, and they are rendered conductive to allow current flow from a power source (not shown). A voltage drop upon this current flow is measured by the four sides of film 31, thereby detecting the position of the conductive point.

Input apparatus 21 can display dots or characters on a liquid-crystal display, and allow inputting of the corresponding position data on the display screen. With apparatus 21, a character and its input position can be simultaneously displayed on the display screen. Therefore, when an operator writes a character on device 11, the shape thereof is displayed, thus enabling handwritten input as if the character were written on paper. In this manner, the handwritten character input operation can be performed using apparatus 21.

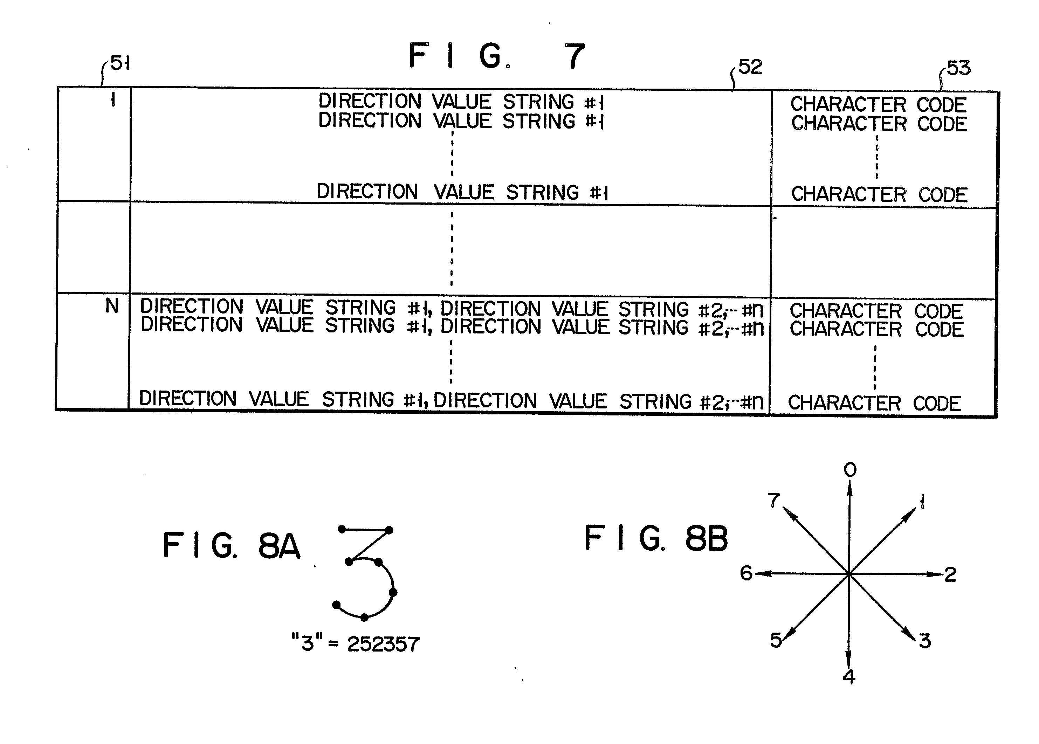

Controller 12 comprises input section 41, recognition processing section 42, character size processing section 43, output section 44, and internal memory 45, as shown in Fig. 6. Input section 41 reads the coordinate position data input from device 11, and stores it in position data buffer 451 in internal memory 45. Recognition processing section 42 analyzes data in buffer 451, refers to the content of dictionary data buffer 452 in memory 45 to extract a character code corresponding to the input data, and then stores it in output buffer 454 of memory 45. Upon operation of section 42, a portion of dictionary data stored in external storage device 13 is temporarily stored in buffer 452. Character size processing section 43 examines maximum and minimum values of x- and y-coordinates for each input stroke based on the data in buffer 451, thereby calculating the size of the written character. Next, section 43 determines the character size corresponding to the calculated size by referring to character size table 453
of memory 45, and stores the character size data in
output buffer 454.  Output section 44 derives the character code data and the character size data obtained by
sections 42 and 43 from output buffer 454, and outputs
them to display device 14.  Display device 14 displays a
character corresponding to the character code supplied
from section 44 in the character size corresponding to
the supplied character size data.

External storage device 13 has the content illustrated in Fig. 7.  The content includes stroke number
51, direction component data 52, and character code 53
corresponding to data 52.  Direction component data 52
expresses the direction (or directions) of a line (or
lines) constituting each stroke, by a direction value
shown in Fig. 8B or a combination thereof, and consists
of a direction value string as shown in Fig. 8A.  Therefore, direction component data 52 corresponding to each
character data consists of at least one direction value
string.  External storage device 13 stores character
code 53 corresponding to data 52.

An input operation using the character input apparatus of the present invention will now be described in
detail.

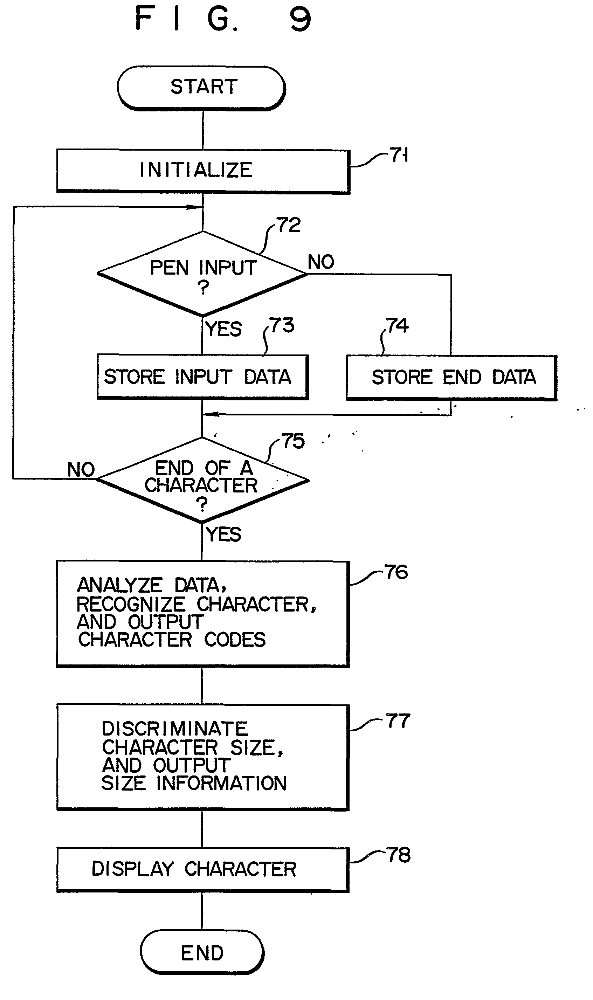

Fig. 9 is a flow chart for, when a character is
written, recognizing the character, discriminating a
character code thereof, and determining the character
size.

When controller 12 starts functioning, recognition
processing section 42 is first operated to initialize
buffers 451, 452, and 454 (71).  Next, control is shifted from section 42 to input section 41, and section 41
examines the status of position input device 11, thereby
checking the ON/OFF state of the pen input (72).  When
the pen input is ON, the coordinate position data is
read and is stored in buffer 451 (73).  In this case, the data is compared with immediately preceding position data, and is stored only when it is discriminated that the coordinate positions are separated by a given value or more. If this were not the case, a large number of data indicating the same point would be stored, making the capacity of buffer 451 insufficient. When the pen input is OFF immediately after the pen input is ON, it is discriminated as a division between strokes, and end data is additionally stored in buffer 451 (74). In this way, when a character consisting of a plurality of strokes is written, coordinate position data for each stroke is separated by the end data, and stored therewith in buffer 451. Input section 41 discriminates the completion of the pen input from the pen-OFF time interval or a distance between the position of the write start point and the previously stored position data (75). If it is discriminated that the input operation of one character is completed, control is returned to section 42. Section 42 analyzes data in buffer 451. First, the end data is checked to detect the number of strokes. A direction value between two points is discriminated from respective coordinate position data constituting each stroke, thus forming direction value string data. When the direction value string data is checked and if it is discriminated that the same direction values are continuous, these values are represented by one, thereby compressing the direction value string data. Next, section 42 stores dictionary data consisting of direction component data corresponding to the number of strokes and character code data in buffer 452, and compares the thus obtained direction value string data with the direction component data in buffer 452. From the comparison result, if there is coincidence between the two, a character code corresponding thereto is extracted and is written in buffer 454 (76). Even when there is not complete coincidence between the two, if they are similar to each other within an allowable range, the character code corresponding thereto is extracted. In this way, the input character is recognized.

Next, control is shifted to character size processing section 43. Section 43 calculates maximum and minimum values of x- and y-coordinates for each stroke from the data stored in buffer 451. Maximum and minimum values are obtained from the thus obtained maximum and minimum values for each stroke, thereby obtaining the size of written character.

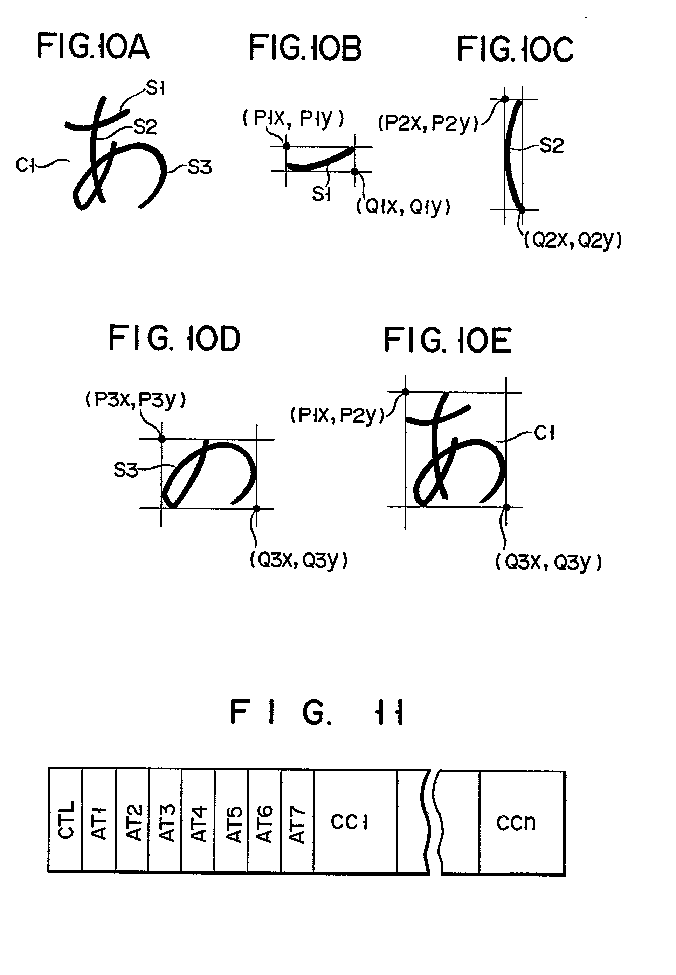

Calculation of the character size will be described in detail with reference to Figs. 10A to 10E. In this case, the size of character Cl shown in Fig. 10A is obtained. Character Cl is constituted by strokes S1 to S3, as shown in Figs. 10A to 10D. When these three strokes S1 to S3 are input, the maximum and minimum values of the x- and y-coordinates for each stroke are obtained. More specifically, coordinates $(Plx, Ply)$ and $(Qlx, Qly)$ for first stroke S1, coordinates $(P2x, P2y)$ and $(Q2x, Q2y)$ for second stroke S2, and coordinates $(P3x, P3y)$ and $(Q3x, Q3y)$ for third stroke S3 are respectively obtained. Then, the maximum and minimum values of these coordinates for strokes S1 to S3, i.e., coordinates $(Plx, P2y)$ and $(Q3x, Q3y)$ shown in Fig. 10E, are obtained. The size of character Cl is obtained from these coordinate data $(Plx, P2y)$ and $(Q3x, Q3y)$.

Character size data corresponding to the obtained character size is obtained by referring to character size table 453. The obtained character size data is stored, as attribute data of the character recognized in step 76, in buffer 454 to correspond with the character code (77). The character size table is stored or set in table 453 prior to the processing. The character size table is used for obtaining a character size for display (or printing) from the size of the character written on the input surface. For example, if the size of the written character is 10 mm × 10 mm to 15 mm × 15 mm,

character size data to be displayed (or printed) within the area of 4 mm × 4 mm is obtained. Therefore, when the written character size falls within the allowable range, even if the size of the written characters varies widely, the same character size can be selected.

After the character size is discriminated, control is shifted to output section 44. Output section 44 supplies the character code and the character size data as the attribute data stored in buffer 454 to display device 14 to be displayed thereon (78). In this way, the written character can be displayed in a size corresponding to the written size.

The character size data designated by the apparatus of the present invention also determines a character size printed by, e.g., a printer.

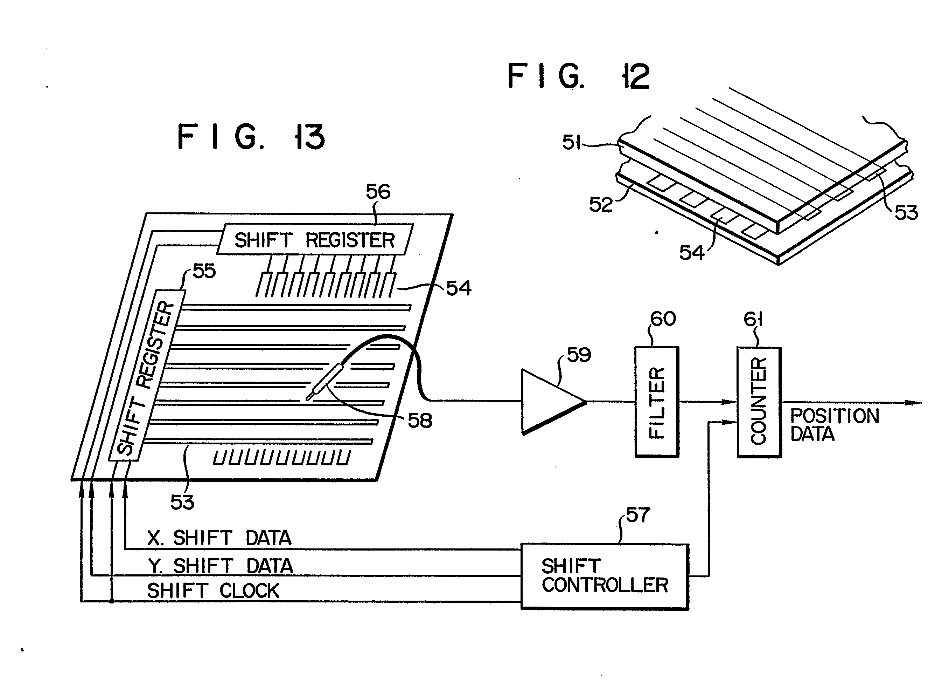

In general, when an input character string is processed (e.g., displayed, edited, or printed), it is treated as data including the attribute of a character. More specifically, normal character string data consists of control code CTL, attribute values AT1 to AT7, and character codes CC1 to CCn as shown in Fig. 11. Attribute values AT1 to AT7 respectively correspond to a vertical/horizontal writing attribute, a character space attribute, a line spacing attribute, a position attribute indicating a starting position of a character string, a character size attribute, a character color attribute, and a type attribute. Therefore, the character size data determined as above is set in character size attribute AT5.

It should be noted that the present invention is not limited to the above embodiment, and various changes and modifications may be made within the spirit and scope of the invention.

For example, it can be selected whether the displayed character size is changed in accordance with an input character size or is constant.

The input character size varies in accordance with the type of character or with the operator.  Therefore, not only the output character size corresponding to the input character size is uniquely determined, as described in the above embodiment, but also a reference character size for each character can be registered as attribute data of a standard pattern for recognition. After the character is recognized, its character size data as attribute data is read out to be compared with the input character size, thereby determining the output character size.  With this arrangement, characters whose X and/or Y direction size is much smaller than that of a normal character (e.g., "-", "|", ".", ",", and the like) can be prevented from being erroneously discriminated.  Character size data can be expressed and stored by a character height and a character width or by a product thereof.

A standard character pattern can be desirably stored in a dictionary, and a standard character size can be changed in accordance with character type and/or character size unique to an operator.

Position input device 11 is not limited to a device for detecting a position by electrical contact, as shown in Figs. 4 and 5, but can be an electrostatic tablet for detecting a position in accordance with a change in capacitance.

More specifically, an electrostatic tablet has a pair of transparent glass plates 51 and 52, and a plurality of elongated transparent electrodes 53 and 54 are respectively arranged on one surface of each of glass plates 51 and 52 to be parallel to each other at equal intervals, as shown in Fig. 12.  These glass plates 51 and 52 are overlayed so that their electrode surfaces oppose each other and the extending directions of electrodes 53 and 54 are perpendicular to each other.  In this case, electrodes 53 and 54 are insulated by an insulative protection film (not shown).  The electrode sections are driven by a circuit shown in Fig. 13.  More specifically, electrodes 53 and 54 are respectively connected to shift registers 55 and 56. Each time shift registers 55 and 56 are shifted by shift controller 57 in response to a predetermined shift clock, a voltage is applied thereto. A change in voltage of electrodes 53 and 54 is detected by detection electrode pen 58 by means of electrostatic coupling. The detected voltage is amplified by amplifier 59, a noise component is removed therefrom by filter 60, and the resultant signal is then input to counter 61. Counter 61 counts the number of shifts of electrodes 53 and 54, and coordinate data of a position at which a signal is input from filter 60 can be obtained based on the count of counter 61.

Position input device 11 need not always be integrated with display device 14.

The character input apparatus of the present invention is not limited to Japanese, English, and Chinese wordprocessors, and the like, but can be applied to any other systems which input Japanese, English, and Chinese characters.

Claims:

1.   A character input apparatus characterized by comprising:

position input means (11) for inputting a coordinate value corresponding to a position indicated by contacting an input surface;

recognition processing means (42) for analyzing a coordinate value string sequentially input by said position input means (11) to obtain a character code corresponding thereto;

character size processing means (43) for discriminating a distribution range of the coordinate value string to obtain character size data corresponding to the size of the distribution range; and

display means (14) for displaying the character code obtained by said recognition processing means (42) in a character size corresponding to character size data obtained by said character size processing means (43).

2.   An apparatus according to claim 1, characterized in that said character size processing means (43) obtains a difference between maximum and minimum values of coordinate values from coordinates input by said position input means (11), and discriminates the size of the input character in accordance with the difference data.

3.   An apparatus according to claim 1, characterized in that said display means is a liquid crystal display device (14).

4.   An apparatus according to claim 1, characterized in that said position input means (11) is integrated with said display means (14).

5.   An apparatus according to claim 4, characterized in that said position input means is a transparent sheet-like means (11) provided on a display screen of said display means (14).

6.   An apparatus according to claim 4, characterized in that said character size processing means (43) obtains a difference between maximum and minimum values of coordinate values from coordinates input by said position input means (11), and discriminates the size of the input character in accordance with the difference data.

7. An apparatus according to claim 4, characterized in that said display means is a liquid crystal display device (14).

8. An apparatus according to claim 1, characterized in that a character input by said position input means is a Japanese character.

9. An apparatus according to claim 1, characterized in that a character input by said position input means is a Roman letter.

# F I G. 1

# F I G. 2

0206829

# FIG. 3

POSITION INPUT DEVICE (11) — CONTROLLER (12) — EXTERNAL STORAGE DEVICE (13)

DISPLAY DEVICE (14) — 21

# FIG. 6

INPUT SECTION — 41

RECOGNITION PROCESSING SECTION — 42

CHARACTER SIZE PROCESSING SECTION — 43

OUTPUT SECTION — 44

45

POSITION DATA BUFFER — 451

DICTIONARY DATA BUFFER — 452

CHARACTER SIZE TABLE — 453

OUTPUT BUFFER — 454

# F I G. 4

# F I G. 5

# FIG. 7

| 51 | 52 | 53 |
|----|----|----|
| 1 | DIRECTION VALUE STRING #1<br>DIRECTION VALUE STRING #1<br><br>DIRECTION VALUE STRING #1 | CHARACTER CODE<br>CHARACTER CODE<br><br>CHARACTER CODE |
|  |  |  |
| N | DIRECTION VALUE STRING #1, DIRECTION VALUE STRING #2,···#n<br>DIRECTION VALUE STRING #1, DIRECTION VALUE STRING #2,···#n<br><br>DIRECTION VALUE STRING #1, DIRECTION VALUE STRING #2,···#n | CHARACTER CODE<br>CHARACTER CODE<br><br>CHARACTER CODE |

## FIG. 8A

"3" = 252357

## FIG. 8B

0206829

# FIG. 9

START

INITIALIZE — 71

PEN INPUT ? — 72

NO

YES

STORE INPUT DATA — 73

STORE END DATA — 74

END OF A CHARACTER ? — 75

NO

YES

ANALYZE DATA, RECOGNIZE CHARACTER, AND OUTPUT CHARACTER CODES — 76

DISCRIMINATE CHARACTER SIZE, AND OUTPUT SIZE INFORMATION — 77

DISPLAY CHARACTER — 78

END

## FIG.10A

## FIG.10B

## FIG.10C

## FIG.10D

## FIG.10E

## FIG. 11

| CTL | AT1 | AT2 | AT3 | AT4 | AT5 | AT6 | AT7 | CC1 | ⌇ | ccn |
|-----|-----|-----|-----|-----|-----|-----|-----|-----|---|-----|

F I G. 13

F I G. 12

56
SHIFT REGISTER

55
SHIFT REGISTER

54

58

53

51

52

54

53

59

60
FILTER

61
COUNTER

POSITION
DATA

57
SHIFT
CONTROLLER

X. SHIFT DATA

Y. SHIFT DATA

SHIFT CLOCK

0206829